# EUROPÄISCHE PATENTSCHRIFT

(11) **EP 4 076 893 B1**
(45) Veröffentlichungstag und Bekanntmachung des Hinweises auf die Patenterteilung: **04.09.2024**
(21) Anmeldenummer: 20807042.5
(22) Anmeldetag: 19.11.2020
(51) Int. Cl.: B29C 45/16, G02B 19/00, B29D 11/00, F21S 43/40, F21S 43/31, F21S 43/27, F21S 43/20, F21S 41/32, F21S 41/29, F21S 41/20, F21S 41/24, G02B 3/00, B29C 45/14, G02B 7/02, G02B 27/30, B29L 11/00

(54) **VERFAHREN ZUR HERSTELLUNG EINER HALTEVORRICHTUNG**
METHOD FOR MANUFACTURING A HOLDING DEVICE
PROCÉDÉ DE FABRICATION D'UN DISPOSITIF DE MAINTIEN

(30) Priorität: 18.12.2019 EP 19217621
(43) Veröffentlichungstag der Anmeldung: 26.10.2022
(73) Patentinhaber: ZKW Group GmbH, 3250 Wieselburg (AT)
(72) Erfinder: STEINKELLNER, Johann, 3684 St. Oswald (AT); HACKER, Alexander, 3150 Wilhelmsburg (AT); SCHADENHOFER, Peter, 3382 Roggendorf (AT)
(74) Vertreter: Patentanwaltskanzlei Matschnig & Forsthuber OG
(86) Internationale Anmeldenummer: PCT/EP2020/082666
(87) Internationale Veröffentlichungsnummer: WO 2021/121848

(56) Entgegenhaltungen:
- EP-A1- 3 409 439
- DE-U1- 202011 050 563
- US-A1- 2011 164 850

## Beschreibung

Die Erfindung betrifft ein Verfahren zur Herstellung einer Haltevorrichtung, wobei in der Haltevorrichtung ein Lichtführungskanal ausgebildet ist, welcher sich von einem ersten Endabschnitt zu einem zweiten Endabschnitt der Haltevorrichtung erstreckt und in einem Lichtaustrittsbereich mündet, wobei der erste Endabschnitt einen Aufnahmebereich aufweist, in welchem ein erstes optisches Element formschließend befestigbar ist, wobei das erste optische Element eine erste optische Achse aufweist, wobei der zweite Endabschnitt eine Anschlagfläche zur Verbindung mit einem zweiten optischen Element aufweist, wobei das zweite optische Element eine zweite optische Achse aufweist, wobei die Anschlagfläche den Lichtaustrittsbereich umschließt und begrenzt.

Aus dem Stand der Technik sind Haltevorrichtungen, welche als Lichtführungskanal und zur Halterung von optischen Bauteilen ausgebildet sind, bekannt. US 2011/0164850 A1 zeigt ein Herstellungsverfahren für eine optische Halbleiterkomponente mit integriertem Gehäuse. DE 20 2011 050563 U1 zeigt eine LED-Leuchte mit einer LED, einer Optik und einem Leuchtengehäuse.

Nachteiligerweise weisen bekannte Haltevorrichtungen an den ersten und zweiten Endabschnitten strukturelle Ungenauigkeiten auf, welche durch das Herstellungsverfahren bedingt sind. Somit kann es, wenn an den Endabschnitten der Haltevorrichtung optische Bauteile befestigt sind, bei einer Lichtübertragung von einem ersten zu einem zweiten optischen Bauteil zu Fehlern bzw. Ungenauigkeiten kommen.

Die Aufgabe der vorliegenden Erfindung besteht darin, die Nachteile des Standes der Technik zu lindern bzw. zu beseitigen. Die Erfindung setzt sich daher insbesondere zum Ziel, ein Verfahren zur Herstellung einer verbesserten Haltevorrichtung zu schaffen.

Diese Aufgabe wird durch ein Verfahren mit den Merkmalen von Anspruch 1 gelöst. Bevorzugte Ausführungen sind in den abhängigen Ansprüchen angegeben.

Erfindungsgemäß weist das Verfahren die folgenden Schritte auf:
a) Bereitstellen des ersten optischen Elements;
b) Bereitstellen einer Spritzgussvorrichtung zur Durchführung eines Spritzgussverfahrens, wobei die Spritzgussvorrichtung eine erste und zweite Werkzeughälfte aufweist, die im geschlossenen Zustand gemeinsam einen Hohlraum zur Ausbildung der Haltevorrichtung umschließen, wobei ein erster Teil des Hohlraumes in der ersten Werkzeughälfte ausgebildet wird und ein verbleibender zweiter Teil des Hohlraumes in der zweiten Werkzeughälfte ausgebildet wird, wobei der zweite Teil des Hohlraumes in der zweiten Werkzeughälfte als Vertiefung ausgebildet ist, die sich ausgehend von einer Trennlinie der beiden Werkzeughälften bis zu einer in der zweiten Werkzeughälfte ausgebildeten ersten Stirnfläche erstreckt, wobei diese erste Stirnfläche die Anschlagsfläche einer in dem Hohlraum auszuformenden Haltevorrichtung begrenzt, wobei in der Vertiefung ein sich im geschlossenen Zustand in Richtung der ersten Werkzeughälfte erstreckender Stempel angeordnet ist, der die Innenfläche eines diesen Stempels umschließenden Mantels der Haltevorrichtung zur Ausbildung des Lichtführungskanals der Haltevorrichtung festlegt, wobei durch das der ersten Werkzeughälfte zugewandte Ende des Stempels eine zweite Stirnfläche ausgebildet ist, wobei die zweite Stirnfläche des Stempels parallel zu der in der zweiten Werkzeughälfte ausgebildeten ersten Stirnfläche ausgebildet ist,
c) Einbringen des ersten optischen Elements in die erste Werkzeughälfte der Spritzgussvorrichtung,
d) Schließen der Werkzeughälften, wobei das erste optische Element dabei an der zweiten Stirnfläche flächig aufliegt und dadurch in seiner Orientierung zumindest teilweise festgelegt wird;
e) Ausbilden des ersten Endabschnittes der Haltevorrichtung durch Einbringen von Spritzgussmaterial in den Hohlraum und dadurch Umspritzen des ersten optischen Elements mit Spritzgussmaterial, wobei während des Umspritzens das erste optische Element an der zweiten Stirnfläche formschließend anliegt,
f) Einbringen von weiterem Spritzgussmaterial zur Ausbildung eines den Lichtführungskanal umschließenden Mantels der Haltevorrichtung durch Umspritzen des Stempels mit Spritzgussmaterial,
g) Ausbilden des den Mantel der Haltevorrichtung abschließenden zweiten Endabschnittes mitsamt der ersten Anschlagfläche durch Einbringen von zusätzlichem Spritzgussmaterial in den Hohlraum.

Das Spritzgussverfahren ist vorzugsweise ein Insert-Spritzgussverfahren. Das erste optische Element liegt gemäß Schritt d) und e) an der zweiten Stirnfläche an, wobei die erste optische Achse des ersten optischen Elements vorzugsweise orthogonal zur zweiten Stirnfläche orientiert ist. Die erste und die zweite Stirnfläche sind vorzugsweise eben bzw. plan bzw. ungekrümmt ausgebildet. Die Orientierung des ersten optischen Elements kann somit, durch das Anliegen des ersten optischen Elements an der zweiten Stirnfläche, in zwei Dimensionen festgelegt bzw. fixiert sein. Das erste optische Element kann, wenn es an der zweiten Stirnfläche anliegt, einen Freiheitsgrad, eine Rotation des ersten optischen Elements um dessen optische Achse, welche vorzugsweise parallel, insbesondere koaxial, zur Längsachse des Stempels verläuft, aufweisen. Vorzugsweise ist an dem zweiten Endabschnitt ein zweites optisches Element befestigt, wobei das zweite optische Element eine optisch aktive Fläche aufweisen kann, welche orthogonal zu dessen optischer Achse orientiert sein kann. Wenn das zweite optische Element an dem zweiten Endabschnitt befestigt ist, kann das zweite optische Element die Anschlagfläche der Haltevorrichtung kontaktieren, wobei die optische aktive Fläche parallel zu der Anschlagfläche und die zweite optische Achse orthogonal zu der Anschlagfläche orientiert sein können. Vorzugsweise ist eine Parallelität zwischen der ersten und zweiten Stirnfläche und/oder eine Orthogonalität der ersten optischen Achse zu der zweiten Stirnfläche und/oder eine Orthogonalität der zweiten optischen Achse zu der ersten Stirnfläche realisiert. Dadurch ergibt sich der Vorteil, dass, wenn an dem ersten Endabschnitt das erste optische Element und an dem zweiten Endabschnitt das zweite optische Element befestigt ist, die erste und zweite optische Achse parallel zueinander, insbesondere koaxial, orientiert sind. Somit kann Licht, welches von dem ersten optischen Element innerhalb des Lichtführungskanals auf das zweite optische Element abgestrahlt wird, besonders effizient von dem ersten zu dem zweiten optischen Element geleitet werden. Dadurch, dass die erste und die zweite Stirnfläche in dem Hohlraum der zweiten, und damit in derselben, Werkzeughälfte gebildet sind, kann eine sehr hohe Genauigkeit bei der Parallelität der ersten und zweiten Stirnfläche erreicht werden, wobei eine hohe Genauigkeit bei der Parallelität der ersten und zweiten Stirnfläche eine hohe Genauigkeit bei der Parallelität der einander zugewandten optisch aktiven Flächen des ersten und zweiten optischen Elements zur Folge hat. Die hohe Genauigkeit bei der Parallelität der ersten und zweiten Stirnfläche ist auch ausschlaggebend für die Parallelität der ersten und zweiten optischen Achsen. Hohe Genauigkeit bei der Parallelität ist dahingehend zu verstehen, dass bei einer hohen Genauigkeit die Abweichung von einer perfekten Parallelität möglichst gering ist. Alternativ zu dem Insert-Spritzgussverfahren kann die Spritzgussvorrichtung auch dazu eingerichtet sein, ein 2K-Spritzgussverfahren auszuführen. Im Falle eines 2K-Spritzgussverfahrens, ist das Einbringen des ersten optischen Elements in die erste Werkzeughälfte nicht erforderlich. Im geschlossenen Zustande der beiden Werkzeughälften kann eine Begrenzungsfläche der ersten Werkzeughälfte, wobei sich die Begrenzungsfläche bis zur Trennlinie der beiden Werkzeughälften erstreckt, die zweite Stirnfläche kontaktieren. Der erste Endabschnitt der Haltevorrichtung kann durch Einbringen von Spritzgussmaterial in den Hohlraum und dadurch Umspritzen eines an der zweiten Stirnfläche ausgebildeten Endbereichs des Stempels mit Spritzgussmaterial erzeugt werden. Vorzugsweise kann das erste optische Element an dem ersten Endabschnitt formschlüssig befestigt werden.

Es kann vorgesehen sein, dass die Längsachse des Stempels normal zu der ersten und zweiten Stirnfläche orientiert ist und die optische Achse des ersten optischen Elements im Schritt d) parallel zur Längsachse des Stempels orientiert ist. Vorzugsweise ist die zweite optische Achse des zweiten optischen Elements parallel zur Längsachse des Stempels orientiert.

Es kann vorgesehen sein, dass die Haltevorrichtung derart ausgebildet ist, dass, wenn das erste optische Element an dem ersten Endabschnitt befestigt ist und das zweite optische Element an der Anschlagfläche des zweite Endabschnitts befestigt ist, die optische Achse des ersten optischen Elements und die optische Achse des zweiten optischen Elements parallel, vorzugsweise koaxial, zueinander sind.

Es kann vorgesehen sein, dass sich Licht innerhalb des Lichtführungskanals von dem ersten optischen zu dem zweiten optischen Elemente parallel zur optischen Achse des ersten und zweiten optischen Elements ausbreitet. Dadurch ergibt sich der Vorteil, dass die Lichtübertragung von dem ersten zu dem zweiten optischen Element effizient und verlustfrei erfolgen kann. Ferner kann das Licht, nach dem Durchritt durch das zweite optische Element, von einer Lichtaustrittsfläche des zweiten optischen Elements besonders gleichmäßig abgestrahlt werden bzw. austreten. Gleichmäßig bedeutet in diesem Zusammenhang, dass Licht mit einer pro Lichtaustrittsflächeneinheit konstanten Helligkeit von der Lichtaustrittsfläche des zweiten optischen Elements abgestrahlt wird.

Erfindungsgemäß ist das erste optische Element ein Kollimator. Der Kollimator ist vorzugsweise dazu eingerichtet, Licht von einer Lichtquelle zu empfangen, die Lichtstrahlen parallel zu richten und die Lichtstrahlen als paralleles Lichtbündel abzustrahlen. Der Kollimator kann einen Lichtaustrittsbereich aufweisen, von welchem das parallel gerichtete Licht der Lichtquelle abgestrahlt wird. Der Lichtaustrittsbereich des Kollimators kann eine Austrittsfläche, aus welcher Licht austreten bzw. abgestrahlt werden kann, umfassen, welche vorzugsweise während dem Verfahrensschritt e) an der zweiten Stirnfläche anliegt. Die Austrittsfläche des Kollimators ist vorzugsweise parallel zu der zweiten Stirnfläche und orthogonal zur ersten und/oder zweiten optischen Achse.

Erfindungsgemäß ist das zweite optische Element ein Mikro-Linsen-Array. Das Mikro-Linsen-Array (MLA) kann eine optisch aktive Fläche aufweisen, welche der Austrittsfläche des zweiten optischen Elements bzw. des Kollimators zugewandt ist. Es kann Licht von dem ersten optischen Element durch den Lichtführungskanal der Haltevorrichtung hindurch auf die optisch aktive Fläche das MLA abgestrahlt werden. An einer dem ersten optischen Element abgewandten Seite kann das MLA eine Lichtaustrittsfläche aufweisen, welche aus einer Vielzahl von Linsen, insbesondere Mikrolinsen, gebildet ist, welche matrixförmig (bzw. rasterförmig) an der Lichtaustrittsfläche angeordnet sind. Jede Mikrolinse des MLA kann dazu eingerichtet sein, Licht als Lichtbündel abzustrahlen. Durch die Verwendung eines MLA ergibt sich der Vorteil, dass ein möglicher Brennglaseffekt innerhalb des MLA und nicht innerhalb der Haltevorrichtung entstehen kann. Dies führt dazu, dass die Haltevorrichtung aus einem weicheren Material hergestellt werden kann. Dadurch kann die Haltevorrichtung aus mehreren Komponenten hergestellt werden, wobei die Haltevorrichtung dadurch beispielsweise Sichtfenster aufweisen kann.

Es kann vorgesehen sein, dass die Haltevorrichtung und die daran befestigten ersten und zweiten optischen Elemente ein geschlossenes Volumen bilden.

Eine Haltevorrichtung kann vorgesehen sein, wobei die Haltevorrichtung mit dem erfindungsgemäßen Verfahren hergestellt wird. Die Haltevorrichtung umfasst einen Lichtführungskanal, welcher sich von einem ersten Endabschnitt zu einem zweiten Endabschnitt der Haltevorrichtung erstreckt und in einem Lichtaustrittsbereich mündet, wobei an dem ersten Endabschnitt ein erstes optisches Element und an dem zweiten Endabschnitt ein zweites optischen Element befestigt sein kann, wobei das erste optische Element eine erste optische Achse und das zweite optische Element eine zweite optische Achse aufweist. In einem Zustand in dem das erste optische Element an dem ersten Endabschnitt und das zweite optische Element an dem zweiten Endabschnitt befestigt ist, ist vorzugsweise die erste optische Achse parallel, insbesondere koaxial, zu der zweiten optischen Achse orientiert.

Im Rahmen dieser Beschreibung sind die Begriffe "oben", "unten", "horizontal", "vertikal" als Angaben der Ausrichtung zu verstehen, wenn das Verfahren mit einer Spritzgussvorrichtung in normaler Benutzungsstellung durchgeführt wird.

Die Erfindung wird nachstehend anhand eines bevorzugten Ausführungsbeispiels, auf das sie jedoch nicht beschränkt sein soll, noch weiter erläutert. In den Zeichnungen zeigt:
Fig. 1 eine seitliche Ansicht einer erfindungsgemäßen Haltevorrichtung, mit einem ersten und zweiten optischen Element;
Fig. 2 eine perspektivische Ansicht der Haltevorrichtung gemäß Fig. 1; und
Fig. 3 ein erstes und ein zweites optisches Element, ohne der Haltevorrichtung.

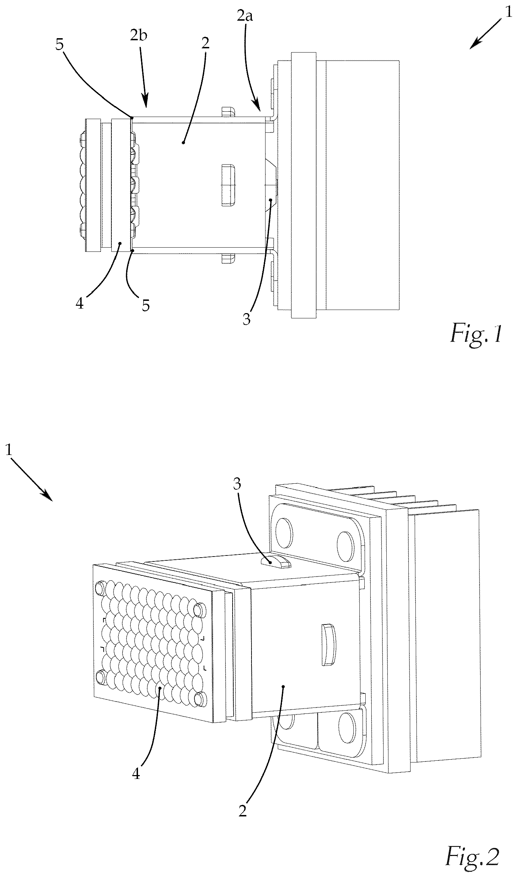

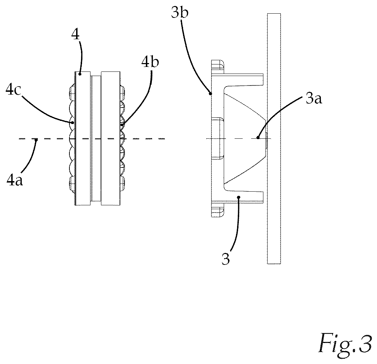

Fig. 1 und Fig. 2 zeigen Ansichten einer Haltevorrichtung 1, wobei in der Haltevorrichtung 1 ein Lichtführungskanal 2 ausgebildet ist, welcher sich von einem ersten Endabschnitt 2a zu einem zweiten Endabschnitt 2b der Haltevorrichtung 1 erstreckt und in einem Lichtaustrittsbereich mündet. An dem ersten Endabschnitt 2a ist ein erstes optisches Element 3 befestigt, welches eine erste optische Achse 3a (s. Fig. 3) aufweist. Das erste optische Element 3 ist ein Kollimator. An dem zweiten Endabschnitt 2b ist ein zweites optisches Element 4 befestigt, welches eine zweite optische Achse 4a aufweist. Das zweite optische Element 4 ist ein Mikro-Linsen-Array. Der erste Endabschnitt 2a weist einen

Aufnahmebereich auf, in welchem das erste optische Element 3 formschließend befestigt ist. Der zweite Endabschnitt 2b weist eine Anschlagfläche 5 auf, an welcher das zweite optische Element 4 befestigt ist. Wie in den Fig. 1 und 2 ersichtlich, kann an dem ersten optischen Element ein Kühlkörper befestigt sein.

Der erste 2a und zweite Endabschnitt 2b ist durch das erfindungsgemäße Verfahren derart ausgebildet, dass, wenn das erste optische Element 3 an dem ersten Endabschnitt 2a und das zweite optische Element 4 an dem zweiten Endabschnitt 2b befestigt ist, die erste 3a und zweite optische Achse 4a parallel, vorzugsweise koaxial, zueinander sind.

Wie in Fig. 3 (die Haltevorrichtung ist zur besseren Übersicht nicht gezeigt) ersichtlich ist, umfasst das erste optische Element 3 die erste optische Achse 3a und orthogonal dazu eine optisch aktive Fläche 3b, aus welcher Licht, vorzugsweise parallel gerichtetes Licht, austreten kann. Das Licht wird in Richtung des zweiten optischen Elements 4 abgestrahlt und trifft auf eine zweite optisch aktive Fläche 4b des zweiten optischen Elements 4. Das Licht tritt durch das zweite optische Element 4 durch und wird an einer Lichtaustrittsfläche 4c abgestrahlt. Um einen effizienten und möglichst verlustfreien Lichttransfer von dem ersten 3 zu dem zweiten optischen Element 4 zu ermöglichen, und um eine möglichst gleichmäßige Lichtabstrahlung aus der Lichtaustrittsfläche 4c des zweiten optischen Elements 4 zu ermöglichen, ist es vorteilhaft, wenn die erste 3b und zweite optisch aktive Fläche 4b möglichst parallel zueinander orientiert sind. Um die Abweichung der Parallelität zu minimieren, ist das Spritzgusswerkzeug, in welcher die Haltevorrichtung 1 hegestellt wird, derart ausgebildet, dass eine erste und zweite Stirnfläche, an welchen die Orientierung des ersten 3 und zweiten optische Elements 4 festgelegt wird, in derselben, in diesem Beispiel in der zweiten, Werkzeughälfte ausgebildet sind.

## Patentansprüche

1. Verfahren zur Herstellung einer Haltevorrichtung (1), wobei in der Haltevorrichtung (1) ein Lichtführungskanal (2) ausgebildet ist, welcher sich von einem ersten Endabschnitt (2a) zu einem zweiten Endabschnitt (2b) der Haltevorrichtung (1) erstreckt und in einem Lichtaustrittsbereich mündet, wobei der erste Endabschnitt (2a) einen Aufnahmebereich aufweist, in welchem ein erste optisches Element (3) formschließend befestigbar ist, wobei das erste optische Element (3) eine erste optische Achse (3a) aufweist, wobei der zweite Endabschnitt (2b) eine Anschlagfläche (5) zur Verbindung mit einem zweiten optischen Element (4) aufweist, wobei das zweite optische Element (4) eine zweite optische Achse (4a) aufweist, wobei die Anschlagfläche (5) den Lichtaustrittsbereich umschließt und begrenzt, wobei das Verfahren die folgenden Schritte umfasst:
a) Bereitstellen des ersten optischen Elements (3),
b) Bereitstellen einer Spritzgussvorrichtung zur Durchführung eines Spritzgussverfahrens, wobei die Spritzgussvorrichtung eine erste und zweite Werkzeughälfte aufweist, die im geschlossenen Zustand gemeinsam einen Hohlraum zur Ausbildung der Haltevorrichtung (1) umschließen, wobei ein erster Teil des Hohlraumes in der ersten Werkzeughälfte ausgebildet wird und ein verbleibender zweiter Teil des Hohlraumes in der zweiten Werkzeughälfte ausgebildet wird, wobei der zweite Teil des Hohlraumes in der zweiten Werkzeughälfte als Vertiefung ausgebildet ist, die sich ausgehend von einer Trennlinie der beiden Werkzeughälften bis zu einer in der zweiten Werkzeughälfte ausgebildeten ersten Stirnfläche erstreckt, wobei diese erste Stirnfläche die Anschlagsfläche einer in dem Hohlraum auszuformenden Haltevorrichtung begrenzt, wobei in der Vertiefung ein sich im geschlossenen Zustand in Richtung der ersten Werkzeughälfte erstreckender Stempel angeordnet ist, der die Innenfläche eines diesen Stempels umschließenden Mantels der Haltevorrichtung (1) zur Ausbildung des Lichtführungskanals (2) der Haltevorrichtung (1) festlegt, wobei durch das der ersten Werkzeughälfte zugewandte Ende des Stempels eine zweite Stirnfläche ausgebildet ist, wobei die zweite Stirnfläche des Stempels parallel zu der in der zweiten Werkzeughälfte ausgebildeten ersten Stirnfläche ausgebildet ist,
c) Einbringen des ersten optischen Elements (3) in die erste Werkzeughälfte der Spritzgussvorrichtung,
d) Schließen der Werkzeughälften, wobei das erste optische Element (3) dabei an der zweiten Stirnfläche flächig aufliegt und dadurch in seiner Orientierung zumindest teilweise festgelegt wird,
e) Ausbilden des ersten Endabschnittes (2a) der Haltevorrichtung (1) durch Einbringen von Spritzgussmaterial in den Hohlraum und dadurch Umspritzen des ersten optischen Elements (3) mit Spritzgussmaterial, wobei während des Umspritzens das erste optische Element (3) an der zweiten Stirnfläche formschließend anliegt,
f) Einbringen von weiterem Spritzgussmaterial zur Ausbildung eines den Lichtführungskanal (2) umschließenden Mantels der Haltevorrichtung (1) durch Umspritzen des Stempels mit Spritzgussmaterial,
g) Ausbilden des den Mantel der Haltevorrichtung (1) abschließenden zweiten Endabschnittes (2b) mitsamt der Anschlagfläche (5) durch Einbringen von zusätzlichem Spritzgussmaterial in den Hohlraum,
**dadurch gekennzeichnet, dass** das erste optische Element (3) ein Kollimator und das zweite optische Element (4) ein Mikro-Linsen-Array ist.

2. Verfahren nach Anspruch 1, wobei die Längsachse des Stempels normal zu der ersten und zweiten Stirnfläche orientiert ist und die optische Achse (3a) des ersten optischen Elements (3) im Schritt d) parallel zur Längsachse des Stempels orientiert ist.

3. Verfahren nach Anspruch einem der vorhergehenden Ansprüche, wobei die Haltevorrichtung (1) derart ausgebildet ist, dass, wenn das erste optische Element (3) an dem Aufnahmebereich des ersten Endabschnitts (2a) befestigt ist und das zweite optische Element (4) an der Anschlagfläche (5) des zweite Endabschnitts (2b) befestigt ist, die optische Achse (3a) des ersten optischen Elements (3) und die optische Achse (4a) des zweiten optischen Elements (4) parallel zueinander sind.

4. Verfahren nach Anspruch einem der vorhergehenden Ansprüche, wobei sich Licht innerhalb des Lichtführungskanals (2) von dem ersten optischen (3) zu dem zweiten optischen Elemente (4) parallel zur den optischen Achsen (3a, 4a) des ersten (3) und zweiten optischen Elements (4) ausbreitet.

5. Verfahren nach Anspruch einem der vorhergehenden Ansprüche, wobei die Haltevorrichtung (1) und die daran befestigten ersten (3) und zweiten optischen Elemente (4) ein geschlossenes Volumen bilden.

## Claims

1. Method for producing a holding device (1), a light guide channel (2) being formed in the holding device (1), which channel extends from a first end section (2a) to a second end section (2b) of the holding device (1) and opens into a light exit region, the first end section (2a) having a receiving region in which a first optical element (3) can be fastened in a form-fitting manner, wherein the first optical element (3) has a first optical axis (3a), wherein the second end portion (2b) has a stop surface (5) for connection to a second optical element (4), wherein the second optical element (4) has a second optical axis (4a), wherein the stop surface (5) encloses and delimits the light exit region, wherein the method comprises the following steps:
a) Providing the first optical element (3),
b) Providing an injection molding device for carrying out an injection molding process, the injection molding device having a first and a second mold half which, in the closed state, together enclose a cavity for forming the holding device (1), wherein a first part of the cavity is formed in the first mold half and a remaining second part of the cavity is formed in the second mold half, wherein the second part of the cavity in the second mold half is formed as a depression which extends from a dividing line of the two mold halves to a first end face formed in the second mold half, wherein this first end face delimits the stop surface of a holding device to be formed in the cavity, wherein a punch extending in the closed state in the direction of the first tool half is arranged in the recess, which punch fixes the inner surface of a casing of the holding device (1) surrounding this punch to form the light guide channel (2) of the holding device (1), wherein a second end face is formed by the end of the punch facing the first tool half, wherein the second end face of the punch is formed parallel to the first end face formed in the second tool half,
c) Inserting the first optical element (3) into the first mold half of the injection molding device,
d) Closing the mold halves, the first optical element (3) thereby resting flat against the second end face and thereby being at least partially fixed in its orientation,
e) Forming the first end section (2a) of the holding device (1) by introducing injection molding material into the cavity and thereby overmolding the first optical element (3) with injection molding material, the first optical element (3) resting against the second end face in a form-fitting manner during overmolding,
f) Introducing further injection molding material to form a jacket of the holding device (1) enclosing the light guide channel (2) by overmolding the die with injection molding material,
g) Forming the second end section (2b), which closes off the casing of the holding device (1), together with the stop surface (5) by introducing additional injection-molding material into the cavity,
**characterized in that** the first optical element (3) is a collimator and the second optical element (4) is a micro-lens array.

2. Method according to claim 1, wherein the longitudinal axis of the die is oriented normal to the first and second end faces and the optical axis (3a) of the first optical element (3) in step d) is oriented parallel to the longitudinal axis of the die.

3. Method according to claim one of the preceding claims, wherein the holding device (1) is designed such that, when the first optical element (3) is fixed to the receiving area of the first end portion (2a) and the second optical element (4) is fixed to the stop surface (5) of the second end portion (2b), the optical axis (3a) of the first optical element (3) and the optical axis (4a) of the second optical element (4) are parallel to each other.

4. Method according to claim one of the preceding claims, wherein light propagates within the light guiding channel (2) from the first optical (3) to the second optical element (4) parallel to the optical axes (3a, 4a) of the first (3) and second optical element (4).

5. Method according to claim one of the preceding claims, wherein the holding device (1) and the first (3) and second optical elements (4) attached thereto form a closed volume.

## Revendications

1. Procédé de fabrication d'un dispositif de maintien (1), un canal de guidage de lumière (2) étant formé dans le dispositif de maintien (1), lequel s'étend d'une première section d'extrémité (2a) à une deuxième section d'extrémité (2b) du dispositif de maintien (1) et débouche dans une zone de sortie de lumière, la première section d'extrémité (2a) présentant une zone de réception dans laquelle un premier élément optique (3) peut être fixé par complémentarité de forme, le premier élément optique (3) présentant un premier axe optique (3a), la deuxième partie d'extrémité (2b) présentant une surface de butée (5) pour la liaison avec un deuxième élément optique (4), le deuxième élément optique (4) présentant un deuxième axe optique (4a), la surface de butée (5) entourant et délimitant la zone de sortie de lumière, le procédé comprenant les étapes suivantes :
a) Mise à disposition du premier élément optique (3),
b) Mise à disposition d'un dispositif de moulage par injection pour la mise en oeuvre d'un procédé de moulage par injection, le dispositif de moulage par injection présentant une première et une deuxième moitié de moule qui, à l'état fermé, entourent ensemble un espace creux pour former le dispositif de maintien (1), une première partie de l'espace creux étant formée dans la première moitié de moule et une deuxième partie restante de l'espace creux étant formée dans la deuxième moitié de moule, la deuxième partie de l'espace creux dans la deuxième moitié de moule étant formée comme un creux qui s'étend à partir d'une ligne de séparation des deux moitiés de moule jusqu'à une première surface frontale formée dans la deuxième moitié de moule, cette première surface frontale délimitant la surface de butée d'un dispositif de retenue à former dans la cavité, un poinçon s'étendant à l'état fermé en direction de la première moitié d'outil étant disposé dans le renfoncement et fixant la surface intérieure d'une enveloppe du dispositif de retenue (1) entourant ce poinçon pour former le canal de guidage de lumière (2) du dispositif de retenue (1), une deuxième surface frontale étant formée par l'extrémité du poinçon tournée vers la première moitié de l'outil, la deuxième surface frontale du poinçon étant formée parallèlement à la première surface frontale formée dans la deuxième moitié de l'outil,
c) Introduction du premier élément optique (3) dans la première moitié de moule du dispositif de moulage par injection,
d) Fermeture des moitiés de moule, le premier élément optique (3) reposant alors à plat sur la deuxième surface frontale et étant ainsi au moins partiellement fixé dans son orientation,
e) Formation de la première section d'extrémité (2a) du dispositif de maintien (1) par introduction de matériau de moulage par injection dans l'espace creux et ainsi surmoulage du premier élément optique (3) avec du matériau de moulage par injection, le premier élément optique (3) s'appliquant contre la deuxième surface frontale en épousant sa forme pendant le surmoulage,
f) Introduction d'un autre matériau de moulage par injection pour former une enveloppe du dispositif de maintien (1) entourant le canal de guidage de lumière (2) par surmoulage du poinçon avec du matériau de moulage par injection,
g) Formation de la deuxième section d'extrémité (2b) fermant l'enveloppe du dispositif de retenue (1), y compris la surface de butée (5), par introduction d'un matériau de moulage par injection supplémentaire dans la cavité,
**caractérisé en ce que** le premier élément optique (3) est un collimateur et le deuxième élément optique (4) est un réseau de microlentilles.

2. Procédé selon la revendication 1, dans lequel l'axe longitudinal du poinçon est orienté perpendiculairement aux première et deuxième faces d'extrémité et l'axe optique (3a) du premier élément optique (3) est orienté parallèlement à l'axe longitudinal du poinçon à l'étape d).

3. Procédé selon l'une quelconque des revendications précédentes, dans lequel le dispositif de maintien (1) est tel que, lorsque le premier élément optique (3) est fixé à la zone de réception de la première portion d'extrémité (2a) et que le deuxième élément optique (4) est fixé à la surface de butée (5) de la deuxième portion d'extrémité (2b), l'axe optique (3a) du premier élément optique (3) et l'axe optique (4a) du deuxième élément optique (4) sont parallèles entre eux.

4. Procédé selon l'une quelconque des revendications précédentes, dans lequel la lumière se propage à l'intérieur du canal de guidage de lumière (2) depuis le premier élément optique (3) vers le deuxième élément optique (4) parallèlement aux axes optiques (3a, 4a) du premier (3) et du deuxième élément optique (4).

5. Procédé selon l'une quelconque des revendications précédentes, dans lequel le dispositif de support (1) et les premier (3) et deuxième éléments optiques (4) qui y sont fixés forment un volume fermé.
